# EUROPÄISCHE PATENTSCHRIFT

(11) **EP 3 100 934 B1**
(45) Veröffentlichungstag und Bekanntmachung des Hinweises auf die Patenterteilung: **12.12.2018**
(21) Anmeldenummer: 16160255.2
(22) Anmeldetag: 15.03.2016
(51) Int. Cl.: B62D 11/24, B62D 9/00, B62D 11/00

(54) **LANDWIRTSCHAFTLICHE ARBEITSMASCHINE**
AGRICULTURAL WORK MACHINE
ENGIN AGRICOLE

(30) Priorität: 08.05.2015 DE 102015107247
(43) Veröffentlichungstag der Anmeldung: 07.12.2016
(73) Patentinhaber: CLAAS Industrietechnik GmbH, 33106 Paderborn (DE)
(72) Erfinder: Mümken, Philipp, 48155 Münster (DE); Claas, Helmut, Dr., 33428 Harsewinkel (DE); Obermeier-Hartmann, Robert, 33142 Büren (DE); Schulze Zumkley, Hendrik, 33397 Rietberg (DE); Schulte, Thomas, 33129 Delbrück (DE); Hammacher, Carolin, 33102 Paderborn (DE)
(74) Vertreter: Budach, Steffen

(56) Entgegenhaltungen:
- EP-A1- 2 337 721
- DE-A1- 10 343 640
- DE-A1- 19 857 047
- DE-A1- 19 857 048
- DE-T2- 69 729 173
- US-A1- 2008 262 689
- US-A1- 2012 253 625
- US-A1- 2013 038 118

## Beschreibung

Die Erfindung betrifft eine landwirtschaftliche Arbeitsmaschine gemäß dem Oberbegriff des Anspruchs 1. Daneben betrifft die Erfindung ein Lenkunterstützungsverfahren gemäß Anspruch 10.

Landwirtschaftliche Arbeitsmaschinen wie Traktoren, selbstfahrende Erntemaschinen oder Erdbewegungsfahrzeuge, weisen üblicherweise mehrere Achsen auf, wobei eine Achse zur Änderung der Fahrtrichtung beispielsweise mit lenkbaren Rädern ausgestattet ist, wobei die Änderung der Fahrtrichtung entlang eines durch die Lenkung der Räder vorgegebenen Spurkreises erfolgt. Zur Verzögerung weisen Arbeitsmaschinen neben einer Betriebsbremse, welche ein in Fahrrichtung gleichmäßiges Verzögern ohne seitliches Verziehen ermöglicht, eine sogenannte Lenkbremse auf. Diese Lenkbremse ermöglicht ein einseitiges Abbremsen eines angetriebenen Rades, so dass bei einer Fahrt im Gelände Kurven durchfahren werden können, welche enger sind, als der Spurkreis, welcher durch die lenkbaren Räder vorgegebenen wird. Dafür sind zur Unterstützung der Lenkung die angetrieben Räder auf der kurveninnenliegenden Fahrzeugseite abbremsbar, während die Räder auf der gegenüberliegenden Fahrzeugseite weiterhin ungebremst angetrieben werden.

Bei modernen, auch allradgetrieben, Arbeitsmaschinen mit großen Reifendimensionen an der Vorderachse und verbesserter Ballastierung der Vorderachsen mit einer entsprechend effektiven Achsschenkellenkung wird die Lenkbremse üblicherweise auf schlammigen Untergründen und ungünstiger Ballastierung eingesetzt, um die Lenkbarkeit zu verbessern oder besonders kleine Wendekreise zu ermöglichen. Dies ermöglicht beispielsweise an einem Vorgewende mit ausgehobenem Anbaugerät im Heck und entsprechend verringerter Last auf der Vorderachse sehr kleine Wenderadien zu fahren.

Bekannt sind derartige Lenkbremsen aus der DE 1 270 961 B und auch der der EP 2 093 111 A1, wobei jeweils eine manuelle Betätigung der Lenkbremse durch den Bediener der Arbeitsmaschine erfolgt. Aus der EP 0 863 062 B12 ist ein Bremssystem zur Erhöhung der Fahrsicherheit für einen Traktor bekannt, welches insbesondere bei einem allradgetriebene Traktor, ein individuelles, auch seitenweises, Ansteuern der Bremsen ermöglicht, um ein Blockieren der Räder auch unter widrigen Verhältnissen zu vermeiden, die herkömmliche Antiblockiersysteme überfordern würden.

DE 198 57 047 A1 offenbart ein Verfahren zum Steuern einer Lenkbremse und stellt den nächstliegenden Stand der Technik dar.

Nachteilig bei heutigen Lenkbremsen sind die Notwendigkeit der manuellen Betätigung und die oftmals Dosierung der Bremskraft. Für diesen Zweck werden üblicherweise zwei nebeneinander angeordnete Bremspedale vorgesehen, die einzeln oder gemeinsam betätigt werden können. Der Fahrer kann beispielsweise am Vorgewende bei Nichtvorhandensein eines Vorgewendemanagement-Systems leicht überfordert sein, da die Steuerung des Anbaugerätes bereits die volle Aufmerksamkeit verlangt. Weiterhin ist die Dosierung der Bremskraft, besonders bei fremdkraftbetätigten Bremsen, nicht einfach. In der Regel wird die Hinterachse stärker gebremst als dies zur Erreichung des an der Vorderachse eingestellten Lenkwinkels notwendig wäre. Dies führt zu einem unstetigen Lenkvorgang und Verspannungen in den Fahrwerkselementen.

Es ist daher eine Aufgabe der vorliegenden Erfindung eine Vorrichtung zur Lenkunterstützung für eine landwirtschaftliche Arbeitsmaschine bereitzustellen, welche eine Entlastung des Bedieners, eine Verbesserung der Lenkfähigkeit und eine Erhöhung der Sicherheit ermöglicht.

Die Lösung der Aufgabe erfolgt erfindungsgemäß durch die kennzeichnenden Merkmale der Ansprüche 1 und 10. Vorteilhafte Ausgestaltungen der Erfindung sind in den Unteransprüchen angegeben.

Eine landwirtschaftliche Arbeitsmaschine mit mindestens einer ersten Asche und einer zweiten Achse, mehreren an den Achsen angeordneten Bodeneingriffsmitteln, wobei die Bodeneingriffsmittel zumindest teilweise durch einen Antriebsmotor antreibbar und/oder, insbesondere mittels einer Achsschenkellenkung, lenkbar ausgebildet sind, mindestens einem an einem lenkbaren Bodeneingriffsmittel angeordneten Lenkwinkelsensor zur Erfassung eines eingestellten Lenkwinkels des zugeordneten Bodeneingriffsmittels, und zumindest einer Lenkbremse zur selektiven Abbremsung eines oder mehrerer, insbesondere antreibbarer, Bodeneingriffsmittel einer Achse zur Lenkunterstützung, wobei erfindungsgemäß eine Steuereinrichtung zum Steuern und Regeln zumindest der Lenkbremse vorgesehen ist, wobei ein Lenkwinkel und/oder ein Schräglaufwinkel mindestens eines lenkbaren Bodeneingriffsmittels bestimmbar ist, und die Lenkbremse in Abhängigkeit von dem Lenkwinkel und/oder dem Schräglaufwinkel steuerbar und regelbar ist.

Eine landwirtschaftliche Arbeitsmaschine weist üblicherweise mehrere Achsen mit daran angeordneten Bodeneingriffsmitteln zum Fortbewegen und Lenken der Arbeitsmaschine auf. Ein Traktor kann beispielsweise eine erste und eine zweite Achse aufweisen, wobei die erste Achse der Vorderachse und die zweite Achse der Hinterachse jeweils mit daran lenkbar und/oder antreibbar angeordneten Bodeneingriffsmitteln entsprechen kann. Eine Lenkung der Bodeneingriffsmittel, insbesondere an der Vorderachse des Traktors, kann dabei durch eine Achsschenkellenkung erfolgen. Hierbei wird von einem Bediener der Arbeitsmaschine ein Lenkwinkel vorgegeben um den dir gelenkten Bodeneingriffsmittel verschwenkt werden. Der vorgegebene Lenkwinkel ist dabei durch mindestens einen Lenkwinkelsensor an mindestens einem gelenkten Bodeneingriffsmittel erfassbar. Neben einer üblicherweise druckmittelgesteuerten, beispielsweise hydraulischen, Betriebsbremse, welche besonders bei einer Straßenfahrt eingesetzt wird und ein im Wesentlichen beidseitig gleichmäßiges Abbremsen der Arbeitsmaschine ermöglicht, weist die Arbeitsmaschine eine Lenkbremse auf. Die Lenkbremse ermöglicht ein seitenweise getrenntes, separates bremsen mindestens eines Bodeneingriffsmittels. Bei einem Traktor sind üblicherweise die an der Hinterachse angeordneten und angetriebenen Bodeneingriffsmittel seitengetrennt, einzeln abbremsbar, wodurch Giermomente zur Unterstützung der gelenkten Bodeneingriffsmittel generiert werden können. Dies ermöglicht einen durch die gelenkten Bodeneingriffsmittel, beispielsweise der Vorderachse, definierten Spurkreis weiter zu verkleinern und so beispielsweise in einem Vorgewende sehr enge Wenderadien zu realisieren. Durch eine Steuereinrichtung, welche mit dem mindestens einen Lenkwinkelsensor verbunden ist, und zu Steuerung und Regelung zumindest der Lenkbremse ausgebildet ist, kann in Abhängigkeit von dem, insbesondere eingestellten, Lenkwinkel und/oder einem Schräglaufwinkel mindestens eines gelenkten Bodeneingriffsmittels automatisch eine selektive Abbremsung eines oder mehrerer, insbesondere angetriebener, Bodeneingriffsmittel erfolgen. Der Schräglaufwinkel ist dabei die Differenz zwischen dem eingestellten, theoretischen, Lenkwinkel und einem tatsächlichen Lenkwinkel, welcher für eine tatsächliche Änderung der Fahrrichtung der Arbeitsmaschine maßgeblich ist. Die Bremskraft der Lenkbremse kann dabei in Abhängigkeit des Lenkwinkels und/oder des Schräglaufwinkels entsprechend dem eingestellten Lenkwinkel und/oder dem Schräglaufwinkel geregelt werden.

Durch die automatische Steuerung und Regelung der Lenkbremse in Abhängigkeit des Lenkwinkels und/oder Schräglaufwinkels erfolgt eine Entlastung des Bedieners der Arbeitsmaschine, da eine manuelle Betätigung entfällt. Zudem kann durch die automatische Aktivierung und Steuerung der Lenkbremse eine Fehlbedienung durch den Bediener vermieden werden, wodurch die Sicherheit erhöht werden kann. Die Aktivierung sowie Steuerung und Regelung der Lenkbremse kann bedarfsgerecht erfolgen, wodurch nicht nur ein effizienter Einsatz der Lenkbremse ermöglicht wird, sondern auch ein genaueres Regeln der jeweiligen Bremseingriffe ermöglicht wird, so dass ein Überbremsen und unnötige Verspannungen im Antriebsstrang vermieden werden können. Dadurch kann die Lenkunterstützung der Achsschenkellenkung verbessert werden und die Lenkfähigkeit bei schwierigen Bodenbedingungen oder bei geringer Vorderachslast weiter verbessert werden.

In einer bevorzugten Ausgestaltung der Erfindung erfolgt eine Steuerung und Regelung der Lenkbremse zumindest in Abhängigkeit des eingestellten Lenkwinkels, einer Ausgangsdrehzahl eines Getriebes der Arbeitsmaschine und einer Umfangsgeschwindigkeit mindestens eines antreibbaren, insbesondere kurveninnenseitigen, Bodeneingriffsmittels. Antreibbare Bodeneingriffsmittel sind bei einem Traktor beispielsweise an der zweiten Achse, der Hinterachse, angeordnet. Neben dem eingestellten Lenkwinkel, welcher durch mindestens einen Lenkwinkelsensor, beispielsweise an einem kurveninnenseitigen Bodeneingriffsmittel, erfassbar ist, kann basierend auf der Ausgangsdrehzahl des Getriebes und der Umfangsgeschwindigkeit mindestens eines antreibbaren Bodeneingriffsmittels eine Steuerung der Lenkbremse basierend auf eine rein geometrische Lenkauslegung erfolgen. Dies hat den Vorteil, dass die Steuerung und Regelung der Lenkbremse unabhängig von Untergründen und Fahrzeugkonfigurationen erfolgt und dadurch besonders auf schlammigen Untergründen robuster ist.

In einer weiteren vorteilhaften Ausgestaltung der Erfindung ist der Schräglaufwinkel mindestens eines lenkbaren Bodeneingriffsmittels in Abhängigkeit des eingestellten Lenkwinkels, der Arbeitsmaschinengeometrie, und der, insbesondere tatsächlichen, Umfangsgeschwindigkeiten kurveninnenseitig und kurvenaußenseitig an einer angetriebenen Achse angeordneter Bodeneingriffsmittel ermittelbar. Der Aufbau des Schräglaufwinkels an den gelenkten Bodeneingriffsmitteln ist notwendig zum Aufbau von Seitenführungskräften, wobei die Bewegung der Arbeitsmaschine in Richtung des tatsächlichen Lenkwinkels erfolgt. Der Schräglaufwinkel entspricht der Differenz zwischen dem eingestellten Lenkwinkel und dem tatsächlichen Lenkwinkel eines Bodeneingriffsmittels. Durch die Berücksichtigung des Schräglaufwinkels für die Steuerung und Regelung der Lenkbremse wird eine effiziente Lenkunterstützung ermöglicht, welche eine Abbremsung eines einzelnen, kurveninneren Bodeneingriffsmittels nur so weit wie für die tatsächliche Lenkbewegung notwendig vornimmt, und nicht entsprechend einer theoretischen Lenkbewegung. Vorteilhaft ist dabei, dass so ein Großteil des Giermoments zur Lenkung der Arbeitsmaschine über die Vorderachse generiert wird, und die Lenkbremse lediglich die tatsächliche Lenkbewegung der Arbeitsmaschine unterstützt.

In einer besonders bevorzugten Ausgestaltung der Erfindung ist erfolgt eine Aktivierung der Lenkbremse in Abhängigkeit eines Verhältnisses zwischen einer theoretischen Umfangsgeschwindigkeit und einer tatsächlichen Umfangsgeschwindigkeit mindestens eines angetriebenen Bodeneingriffsmittels. Die angetriebenen Bodeneingriffsmittel sind dabei an einem Traktor beispielsweise an der Hinterachse, der zweiten Achse, angeordnet. Das Verhältnis der Umfangsgeschwindigkeiten kann als ein erster Schwellwert durch den Bediener vorgebbar und beispielsweise in der Steuereinrichtung hinterlegbar sein. Hierdurch kann eine übermäßige Aktivierung der Lenkbremse vermieden werden, wobei durch die verringerte Abbremsung eines angetriebenen Bodeneingriffsmittels die Effizienz der Arbeitsmaschine verbessert werden kann.

In einer weiter bevorzugten Ausgestaltung der Erfindung erfolgt eine Aktivierung der Lenkbremse in Abhängigkeit einer Grenzgeschwindigkeit, wobei bei deren Unterschreitung die Lenkbremse aktivierbar ist. Die Grenzgeschwindigkeit unterhalb deren die Lenkbremse aktivierbar ist, kann als zweiter Schwellwert vorgegeben und in der Steuereinrichtung gespeichert und/oder durch den Bediener einstellbar sein. Durch den zweiten, geschwindigkeitsabhängigen Schwellwert, kann sichergestellt werden, dass eine Aktivierung der Lenkbremse nur bei der Feldbearbeitung mit entsprechend niedrigen Geschwindigkeiten von beispielsweise weniger als 15 km/h möglich ist. Eine Aktivierung bei einer Geschwindigkeit oberhalb des zweiten Schwellwertes, beispielsweise bei einer Straßenfahrt, kann so vermieden werden, wodurch die Verkehrssicherheit der Arbeitsmaschine deutlich erhöht werden kann. Zudem kann eine Aktivierung der Lenkbremse in Abhängigkeit eines Ortungssignals, beispielsweise eines satellitengestützten Navigationsgerätes, erfolgen, wodurch eine Aktivierung auf vorgegebenen Flächen sichergestellt werden kann. Die Verkehrssicherheit kann dadurch weiter erhöht werden, dass eine bisher zur Aktivierung der manuell gesteuerten Lenkbremse notwendige Entkoppelung der Bremspedale und ein Wiederverbinden der Bremspedale bei Straßenfahrt entfallen, so dass gefährliche Fahrsituationen aufgrund gekoppelter oder entkoppelter Bremspedale vermieden werden können.

In einer besonders bevorzugten Ausgestaltung der Erfindung erfolgt eine Aktivierung der Lenkbremse in Abhängigkeit eines Grenzlenkwinkels und/oder eines Grenzschräglaufwinkels, wobei bei dessen Überschreitung die Lenkbremse aktivierbar ist. Der Grenzlaufwinkel und/oder der Grenzschräglaufwinkel oberhalb deren die Lenkbremse aktivierbar ist, können als dritter Schwellwert vorgegeben und in der Steuereinrichtung gespeichert und/oder durch den Bediener einstellbar sein. Dadurch können kleine Lenkbewegungen, beispielsweise mit einem eingestellten Lenkwinkel kleiner als 10°, rein über eine Achsschenkellenkung der ersten Achse, der Vorderachse, erfolgen, wodurch eine übermäßige Betätigung der Lenkbremse, welche die Antriebsleistung beeinträchtigt, vermieden und so die Effizienz der Arbeitsmaschine erhöht werden kann.

Vorzugsweise weist die Arbeitsmaschine zur Erfassung einer Winkelgeschwindigkeit der Arbeitsmaschine, insbesondere zur Bestimmung des tatsächlichen Lenkwinkels, ein Gyroskop auf. Das Gyroskop kann mit der Steuereinrichtung zur Bestimmung der Winkelgeschwindigkeit, insbesondere um einen Momentanpol, und insbesondere des tatsächlichen Lenkwinkels verbunden sein. Dadurch kann auf kostengünstige Art der Schräglaufwinkel zur Steuerung und Regelung der Lenkbremse ermittelt werden.

In einer besonders bevorzugten Ausgestaltung der Erfindung ist ein, insbesondere satellitengestütztes, Navigationssystem vorgesehen, durch dessen Positionsdaten ein Kurvenradius mindestens einer der Achsen, insbesondere zur Bestimmung des tatsächlichen Lenkwinkels, erfassbar ist. Das, insbesondere satellitengestützte, Navigationssystem kann mit der Steuereinrichtung zur Bestimmung eines Kurvenradius mindestens einer der Achsen, beispielsweise der Vorderachse und/oder der Hinterachse, und insbesondere des tatsächlichen Lenkwinkels, verbunden sein. Dadurch kann auf kostengünstige Art und Weise eine Bestimmung mindestens eines, zur schräglaufwinkelbasierten Steuerung und Regelung der Lenkbremse benötigten, Kurvenradiuses ermöglicht werden. Zudem kann basierend auf den Positionsdaten des Navigationssystems ein automatisierter Einsatz der Lenkbremse zur Unterstützung eines automatischen Wendevorgangs auch bei schwierigen Bodenverhältnissen oder ungünstigen Fahrzeugkonfigurationen ermöglicht werden, beispielsweise in einem Vorgewende.

Bevorzugt ist ein Bodeneingriffsmittel in Form eines Rads oder eines Raupenlaufwerkes ausgebildet. Die landwirtschaftliche Arbeitsmaschine kann ausschließlich mit Bodeneingriffsmitteln in Form von Rädern oder Raupenlaufwerken ausgestattet sein, oder in Form einer sogenannten Halbraupe, wobei die Arbeitsmaschine sowohl Räder als auch Raupenlaufwerke aufweist. Bei einer Arbeitsmaschine in Form einer Halbraupe können beispielsweise an der ersten Achse, der Vorderachse, lenkbare Räder angeordnet sein, während an der zweiten Achse, der Hinterachse, angetriebene Raupenlaufwerke angeordnet sind. Besonders bei einer Halbraupenkonfiguration als Ackerschlepper können die Vorteile beider Bodeneingriffsmittel genutzt werden. Die Vorderachse mit einer für Traktoren üblichen radbasierten Achsschenkellenkung vermittelt dabei ein für den Bediener gewohntes und einfach beherrschbares Lenkverhalten. Kleine Lenkkorrekturen sowie Kurvenfahrt sind ohne den Einsatz aufwendiger Differentiallenkungsgetriebe möglich, so dass ein einfaches Fahrzeugkonzept mit geringen Herstellkosten ermöglicht wird. Zudem kann die Lenkfähigkeit der Arbeitsmaschine bei schwierigen Bodenbedingungen oder bei erhöhtem Wendewiderstandsmoment auf der Hinterachse, insbesondere aufgrund der Raupenlaufwerke, automatisiert durch eine entsprechende Aktivierung der Lenkbremse verbessert werden.

Die Erfindung betrifft weiterhin ein Lenkunterstützungsverfahren für eine landwirtschaftliche Arbeitsmaschine mit mindestens einer ersten Achse und einer zweiten Achse, mehreren an den Achsen angeordneten Bodeneingriffsmittel, wobei die Bodeneingriffsmittel zumindest teilweise durch einen Antriebsmotor antreibbar und/oder, insbesondere mittels einer Achsschenkellenkung, lenkbar ausgebildet sind, mindestens einem an einem lenkbaren Bodeneingriffsmittel angeordneten Lenkwinkelsensor zur Erfassung eines eingestellten Lenkwinkels des zugeordneten Bodeneingriffsmittels, und zumindest einer Lenkbremse zur selektiven Abbremsung eines oder mehrerer, insbesondere antreibbarer, Bodeneingriffsmittel einer Achse zur Lenkunterstützung, wobei erfindungsgemäß eine Steuereinrichtung zum Steuern und Regeln zumindest der Lenkbremse vorgesehen ist, wobei ein, insbesondere eingestellter, Lenkwinkel und/oder ein Schräglaufwinkel mindestens eines lenkbaren Bodeneingriffsmittels bestimmt werden, und die Lenkbremse in Abhängigkeit von dem Lenkwinkel und/oder dem Schräglaufwinkel gesteuert und geregelt wird.

Durch die automatische Steuerung und Regelung der Lenkbremse in Abhängigkeit des Lenkwinkels und/oder Schräglaufwinkels erfolgt eine Entlastung des Bedieners der Arbeitsmaschine, da eine manuelle Betätigung entfällt. Zudem kann durch die automatische Aktivierung und Steuerung der Lenkbremse eine Fehlbedienung durch den Bediener vermieden werden, wodurch die Sicherheit erhöht werden kann. Die Aktivierung sowie Steuerung und Regelung der Lenkbremse kann bedarfsgerecht erfolgen, wodurch nicht nur ein effizienter Einsatz der Lenkbremse ermöglicht wird, sondern auch ein genaueres Regeln der jeweiligen Bremseingriffe ermöglicht wird, so dass ein Überbremsen und unnötige Verspannungen im Antriebsstrang vermieden werden können. Dadurch kann die Lenkunterstützung der Achsschenkellenkung verbessert werden und die Lenkfähigkeit bei schwierigen Bodenbedingungen oder bei geringer Vorderachslast weiter verbessert werden.

Vorteilhafterweise erfolgt eine Aktivierung der Lenkbremse in Abhängigkeit eines Verhältnisses zwischen einer theoretischen Umfangsgeschwindigkeit und einer tatsächlichen Umfangsgeschwindigkeit mindestens eines angetriebenen Bodeneingriffsmittels, einer Grenzgeschwindigkeit und/oder eines Grenzlenkwinkels und/oder eines Grenzschräglaufwinkels erfolgt. Unter einer Aktivierung ist dabei zu verstehen, dass die Lenkbremse durch die Steuereinrichtung steuerbar und regelbar ist. Bei nicht aktivierter Lenkbremse ist keine Betätigung der Lenkbremse, also eine Einzelradbremsung zur Lenkunterstützung, möglich. Der Lenkwinkel, Schräglaufwinkel und/oder Geschwindigkeiten können als Schwellwerte vorgegeben werden, bei deren Über- oder Unterschreiten einen Aktivierung der Lenkbremse erfolgt. Ebenso ist es denkbar, Positionsdaten eines, insbesondere satellitenbasierten, Navigationssystem als positionsbezogene Schwellwerte zu verwenden. Dies hat den Vorteil, dass beispielsweise eine übermäßige Aktivierung sowie Steuerung und Regelung der Lenkbremse oder eine Aktivierung bei einer Straßenfahrt vermieden werden können.

Bevorzugt wird eine Winkelgeschwindigkeit der Arbeitsmaschine, insbesondere zur Bestimmung des Schräglaufwinkels mindestens eines Bodeneingriffsmittels, mittels eines Gyroskops bestimmt. Durch das Gyroskop kann eine Winkelgeschwindigkeit der Arbeitsmaschine, insbesondere um einen Momentanpol, bestimmt werden. Dadurch kann auf kostengünstige Art der Schräglaufwinkel zur Steuerung und Regelung der Lenkbremse ermittelt werden.

Besonders bevorzugt wird ein Kurvenradius mindestens einer Achse mittels eines, insbesondere satellitengestützten, Navigationssystems bestimmt. Dadurch kann auf kostengünstige Art eine Bestimmung mindestens eines zur schräglaufwinkelbasierten Steuerung und Regelung der Lenkbremse benötigten Kurvenradius einer Achse ermöglicht werden

Die Erfindung wird nachfolgend anhand mehrerer Ausführungsbeispiele erläutert. Dazu sei auf die nachfolgende Zeichnung verwiesen. Darin zeigt:
- Fig. 1: eine schematische Seitenansicht einer landwirtschaftlichen Arbeitsmaschine;
- Fig. 2: eine schematische Ansicht einer Achsanordnung einer landwirtschaftlichen Arbeitsmaschine mit einer gelenkten und einer angetrieben Achse;
- Fig. 3a: eine schematische Darstellung einer Achsanordnung einer Arbeitsmaschine zur schräglaufwinkelbasierten Steuerung und Regelung der Lenkbremse;
- Fig. 3b: eine schematische Detailansicht eines gelenkten Bodeneingriffsmittels der in Fig. 3a gezeigten Achsanordnung; und
- Fig. 4: ein Diagramm des Ansprechverhaltens der Lenkbremse in Abhängigkeit eines Schräglaufwinkels.

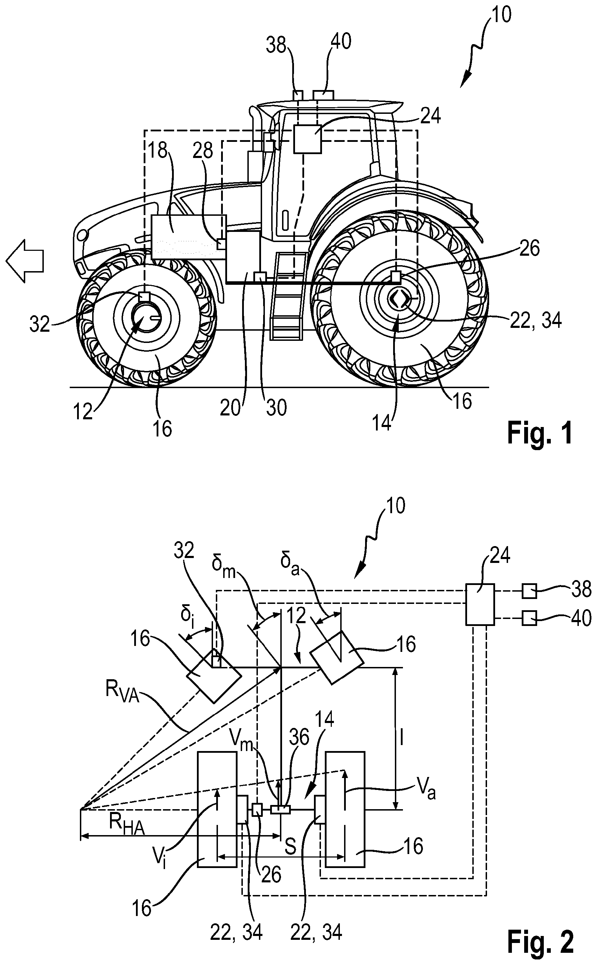

In Fig. 1 ist in einer schematischen Seitenansicht eine landwirtschaftliche Arbeitsmaschine 10 in Form eines Traktors dargestellt. Eine landwirtschaftliche Arbeitsmaschine 10 im Sinne der Erfindung kann auch eine selbstfahrende Erntemaschine wie ein Mähdrescher oder ein Feldhäcksler, oder jede andere, zur landwirtschaftlichen Arbeit genutzte Arbeitsmaschine sein. Die dargestellte landwirtschaftliche Arbeitsmaschine 10 in Form eines Traktors weist eine erste Achse 12 in Form einer gelenkten Vorderachse und eine zweite Achse 14 in Form einer starren Hinterachse auf. Bei einer selbstfahrenden Erntemaschine wie einem Mähdrescher kann die erste Achse beispielsweise eine gelenkte Hinterachse und die zweite Achse eine starre Vorderachse sein. An den Achsen 12, 14 sind jeweils Bodeneingriffsmittel 16 angeordnet. Die Bodeneingriffsmittel 16 können dabei als Räder oder Raupenlaufwerke ausgebildet sein. Die landwirtschaftliche Arbeitsmaschine 10 kann dabei einheitlich mit Rädern oder Raupen ausgestattet sein, oder in Form einer sogenannten Halbraupe, wobei an einer Achse Bodeneingriffsmittel 16 in Form von Rädern angeordnet sind und an einer weiteren Achse Bodeneingriffsmittel 16 in Form von Raupenlaufwerken. Bei einer Arbeitsmaschine 10 in Form eines Traktors mit Halbraupen können beispielsweise an der ersten Achse 12, der Vorderachse, lenkbare Räder angeordnet sein, und an der zweiten Achse 14, der Hinterachse, Raupenlaufwerke. Die Bodeneingriffsmittel 16 an der ersten Achse 12 sind mittels einer Achsschenkellenkung lenkbar ausgestaltet.

Die Arbeitsmaschine 10 weist einen Antriebsmotor 18 auf, welcher über ein Getriebe 20 und einen Antriebsstrand 22 mit der zweiten Achse 14, der Hinterachse, wirkverbunden ist, um eine durch den Antriebsmotor 18 bereitgestelltes Antriebsmoment auf die Hinterachse zu bringen. Dargestellt ist in Fig. 1 eine Arbeitsmaschine 10 mit einem Hinterradantrieb, jedoch ist die erfindungsgemäße Lenkunterstützung ebenso für Arbeitsmaschinen mit Allrad-Antrieb einsetzbar, wobei eine Achse lenkbar und/oder antreibbar sein kann. Üblicherweise ist an der angetriebenen Achse 14 ein Differentialgetriebe (nicht dargestellt) angeordnet, um das Antriebsmoment auf die Bodeneingriffsmittel 16 zu verteilen. An der zweiten Achse 14, der Hinterachse, ist eine Lenkbremse 22 angeordnet, welche ein einseitiges Abbremsen von Bodeneingriffsmitteln 16 der zweiten Achse 14 ermöglicht. Den Bodeneingriffsmitteln 16 an der zweiten Achse 14 sind dabei jeweils Bremseinrichtungen 34 zugeordnet, welche als Betriebsbremse gemeinsam betätigt werden, um beispielsweise bei einer Straßenfahrt die Geschwindigkeit der Arbeitsmaschine 10 zu reduzieren. Diese Bremseinrichtungen 34 sind als Lenkbremse 22 einzeln, insbesondere seitenweise, betätigbar, wodurch eine einseitige Verzögerung der Arbeitsmaschine 10 ermöglicht wird, beispielsweise um einen sehr geringen Wenderadius zu erreichen. Üblicherweise sind Bremseinrichtungen 34 einer Betriebsbremse und/oder Lenkbremse 22 einer modernen landwirtschaftlichen Arbeitsmaschine 10 hydraulisch betätigbar, wobei zum Bremseingriff ein hydraulischer Bremsdruck aufgebaut wird, welcher zu einer Bremskraft an dem entsprechenden Bodeneingriffsmittel 16 führt.

An der angetriebenen zweiten Achse 14 ist einem oder beiden an der Achse 14 angeordneten Bodeneingriffsmitteln 16 ein Drehzahlsensor 26 zugeordnet, um die Drehzahl des jeweiligen Bodeneingriffsmittels 16 zu erfassen. Über einen Antriebsmotorsensor 28 und einen Getriebesensor 30 sind die Abtriebsdrehzahlen des Antriebsmotors 18 und des Getriebes 20 ermittelbar. Über den Getriebesensor 30 und die Abtriebsdrehzahl des Antriebsmotors 18 kann zudem das wirkende Übersetzungsverhältnis des Getriebes 20 bestimmt werden. An der lenkbaren ersten Achse 12, der Vorderachse, ist an einem oder beiden Bodeneingriffsmitteln 16 ein Lenkwinkelsensor 32 angeordnet, über welchen ein an dem jeweiligen Bodeneingriffsmittel 16 eingestellter Lenkwinkel δ ermittelbar ist. Der Lenkwinkel δ wird in Abhängigkeit einer Lenkbewegung eines Bedieners der Arbeitsmaschine 10, beispielsweise über ein Lenkrad, eingestellt, um die Fahrtrichtung der Arbeitsmaschine 10 zu ändern. Der Lenkwinkel δ ist dabei der eingestellte Lenkwinkel δ an einem Bodeneingriffsmittel 16, also der Winkel, um den das Bodeneingriffsmittel 16 aus seiner Nullstellung, für eine Geradeausfahrt der Arbeitsmaschine 10, heraus ausgelenkt wird.

Erfindungsgemäß wird die Lenkbremse 22 der landwirtschaftlichen Arbeitsmaschine 10 durch eine Steuereinrichtung 24 automatisch in Abhängigkeit eines, insbesondere eingestellten, Lenkwinkels δₜₕ und/oder eines Schräglaufwinkels a betätigt, um eine Lenkbewegung der Arbeitsmaschine 10, welche über die erste Achse 12, die lenkbare Vorderachse, vorgegeben wird, zu unterstützen. Die landwirtschaftliche Arbeitsmaschine 10 weist, insbesondere zur schräglaufwinkelbasierten, Steuerung und Regelung der Lenkbremse 22 ein Gyroskop 38 auf, welches mit der Steuereinrichtung 24 zur Signalübermittlung verbunden ist. Ein, insbesondere satellitenbasiertes Navigationssystem 40 der Arbeitsmaschine 10, ist ebenfalls mit der Steuereinrichtung 24 verbunden, so dass Positionssignale des Navigationssystems 40 durch die Steuereinrichtung 24, insbesondere für eine schräglaufwinkelbasierte, Steuerung und Regelung der Lenkbremse 22 nutzbar sind.

In Fig. 2 ist eine schematische Draufsicht einer Achsanordnung einer landwirtschaftlichen Arbeitsmaschine 10 mit einer Lenkbremse 22 und den geometrischen Beziehungen der Achsanordnung, wie der Spur s und dem Radstand I der Arbeitsmaschine 10, dargestellt. Die erste Achse 12 ist eine gelenkte Vorderachse mit daran angeordneten Bodeneingriffsmitteln 16, beispielsweise Rädern oder Raupenlaufwerken. Die Bodeneingriffsmittel 16 sind, beispielsweise durch eine Achsschenkellenkung (nicht dargestellt), jeweils um einen eingestellten Lenkwinkel δ ausgelenkt, wobei das kurveninnere Bodeneingriffsmittel 16 um den Lenkwinkel δᵢ ausgelenkt ist, welcher größer ist als der Lenkwinkel δₐ des kurvenäußeren Bodeneingriffsmittels 16, da der Kurvenradius des inneren Bodeneingriffsmittels 16 kleiner ist, als der Kurvenradius des äußeren Bodeneingriffsmittels 16. Für die Vorderachse kann ein Mittelwert δₘ aus den Lenkwinkeln δᵢ, δₐ der inneren und äußeren Bodeneingriffsmitteln 16 gebildet werden, auf den der Kurvenradius R_{VA} der Vorderachse bezogen ist. Aufgrund des von zweiten Achse 14, der Hinterachse, in deren Mittelpunkt mit der Geschwindigkeit vₘ durchfahrenen Kurvenradius R_{HA} weisen die Umfangsgeschwindigkeiten vᵢ, vₐ des kurveninnenseitigen und des kurvenaußenseitigen Bodeneingriffsmittels 16 unterschiedliche Größen auf. Die Umfangsgeschwindigkeiten vᵢ, vₐ der Bodeneingriffsmittel 16 sind dabei von dem eingestellten Lenkwinkel δ_{i,a} abhängig, wobei zur Lenkunterstützung entsprechend des eingestellten Lenkwinkels δ_{i,a} die Umfangsgeschwindigkeit vi des kurveninnenseitigen Bodeneingriffsmittels 16 mittels der Lenkbremse 22 eingestellt wird.

Die Steuerung und Regelung der Lenkbremse 22 basiert hierbei lediglich auf der geometrischen Lenkauslegung und erfolgt in Anhängigkeit des eingestellten Lenkwinkels δ mindestens eines Bodeneingriffsmittels 16, welcher durch eine Lenkwinkelsensor 32 beispielsweise an dem kurveninnenliegenden Bodeneingriffsmittel 16 erfassbar ist. Der Lenkwinkel δₐ des kurvenaußenseitig liegenden Bodeneingriffsmittels 16 kann durch die Lenkkinematik der ersten Achse 12, welche in der Steuereinrichtung 24 hinterlegbar ist, bestimmt werden. Zur Steuerung und Regelung der Lenkbremse 22 benötigt die Steuereinrichtung 24 neben der theoretischen Umfangsgeschwindigkeit v_{i,th,} v_{a,th} des inneren und äußeren Bodeneingriffsmittels 16 deren tatsächliche Umfangsgeschwindigkeiten v_{i,tat,} v_{a,tat,} wodurch beispielsweise der Einfluss von zu starkem Schlupf kompensiert und ein übermäßiges Abbremsen des inneren Bodeneingriffsmittels 16 vermieden werden kann. Die theoretischen Umfangsgeschwindigkeiten v_{i,tat} und _{va,tat} des inneren und äußeren Bodeneingriffsmittels 16 sind über die geometrischen Beziehungen an der Hinterachse 14 ermittelbar. Die tatsächlichen Umfangsgeschwindigkeit v_{i,tat,} v_{a,tat} des kurveninnenseitigen und kurvenaußenseitigen Bodeneingriffsmittels 16 sind aus deren gemessenen Drehzahlen und den jeweiligen Abrollradien, beispielsweise der Räder oder Raupenlaufwerke, bestimmbar. Hierbei ist bereits ein Drehzahlsensor 26 an einem Bodeneingriffsmittel 16 ausreichend, da die gemessene Drehzahl an dem Bodeneingriffsmittel 16 der Drehzahl einer das Bodeneingriffsmittel 16 antreibenden Ausgangswelle des Differenzials 36 entspricht. Die Drehzahl der anderen Ausgangswelle und somit des anderen Bodeneingriffsmittels 16 kann aus der Drehzahl der Eingangswelle des Differenzials 36 und der Übersetzung des Differenzials 36 bestimmt werden. Die Drehzahl der Eingangswelle des Differenzials 36 entspricht dabei der Drehzahl der Ausgangswelle des Getriebes 20, welche durch den Getriebesensor 30 bestimmbar ist. Ohne einen Getriebesensor 30 kann die Ausgangsdrehzahl des Getriebes 20 aus der Drehzahl des Antriebsmotors 12 und der wirkenden Getriebeübersetzung bestimmt werden.

Eine Steuerung und Regelung der Lenkbremse 22 kann basierend auf dem durch einen Lenkwinkelsensor 32 erfassten eingestellten Lenkwinkel δ_{i,a,} der durch den Drehzahlsensor 26 erfassten Drehzahl eines Bodeneingriffsmittels der zweiten Achse 14 und der Ausgangsdrehzahl des Getriebes 20 zuverlässig erfolgen. Dabei kann die Steuereinrichtung 24 mit Hilfe der genannten Sensorgrößen und der geometrischen Beziehungen zumindest sowohl die theoretische als auch die tatsächliche Umfangsgeschwindigkeit v_{i,th,} v_{i,tat} des kurveninneren Bodeneingriffsmittels 16 bestimmen und die Lenkbremse 22 entsprechend regeln. Dabei kann beispielsweise durch einen Regelkreis eine Abweichung zwischen der theoretischen und der tatsächlichen Umfangsgeschwindigkeit v_{i,th} und v_{i,tat} des kurveninneren Bodeneingriffsmittels 16 durch entsprechende Betätigung der Lenkbremse 22, insbesondere der kurveninneren Bremseinrichtung 34, abgebaut werden. Ein weiterer Vorteil besteht darin, dass auch die Geschwindigkeit vₘ des Mittelpunktes der Hinterachse 14 aus dem Antriebsstrang heraus erfasst werden kann, wodurch das System unanfällig gegenüber den auf schlammigen Böden oft auftretenden hohen Schlupfwerten ist.

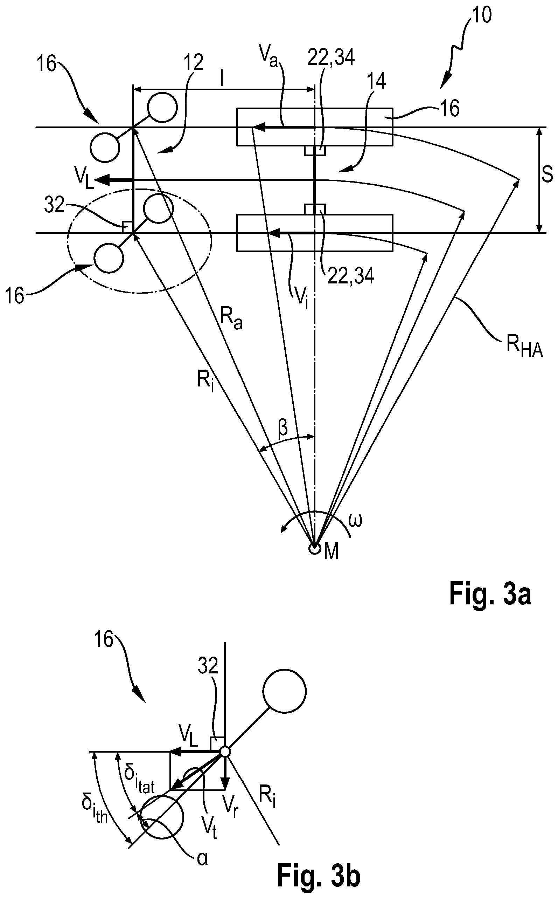

Fig. 3a zeigt ein weiteres Ausführungsbeispiel der erfindungsgemäßen Lenkbremse 22, wobei eine Steuerung und Regelung der Lenkbremse 22 durch die Steuereinrichtung 24 in Abhängigkeit mindestens eines Schräglaufwinkels a eines gelenkten Bodeneingriffsmittels 16 an der ersten Achse 12, der Vorderachse, erfolgt. Der Schräglaufwinkel a eines Bodeneingriffsmittels 16 ist der Winkel zwischen dem über die Lenkung eingestellten, theoretischen Lenkwinkel δₜₕ und dem tatsächlich die Bewegung der Arbeitsmaschine bewirkenden Lenkwinkel δₜₐₜ tat. Ein geringer Schräglaufwinkel a ist dabei notwendig, damit das Bodeneingriffsmittel 16 Seitenführungskräfte zur Änderung der Fahrrichtung aufbauen kann.

Die Regelung der Lenkbremse 22, und insbesondere des Bremsdruckes jeder Seite der Lenkbremse 22, erfolgt dabei basierend auf einem durch die Steuereinrichtung 24 ermittelten Schräglaufwinkel a, welcher aus der Differenz des eingestellten Lenkwinkels δₜₕ und dem tatsächlichen Lenkwinkel δₜₐₜ gebildet wird. Über die Ansteuerung der Lenkbremse 22 ist die Geschwindigkeit der Bodeneingriffsmittel 16 beeinflussbar, deren Differenz einen Einfluss auf den tatsächlichen Lenkwinkel δₜₐₜ ausübt. So kann beispielsweise durch eine kurveninnenseitiges Verzögern des innenseitigen Bodeneingriffsmittels 16 der tatsächliche Lenkwinkel δₜₐₜ vergrößert werden, so dass dieser an den eingestellten Lenkwinkel δₜₕ angenähert wird und der Schräglaufwinkel a dadurch verringert werden kann. Dies bewirkt, dass die Arbeitsmaschine 10 im Wesentlichen auf dem durch die eingestellten Bodeneingriffsmittel 16 Radius seine Fahrtrichtung ändert. Die Regelung der Lenkbremse 22 kann dabei ab einem vorgegebenen Grenzschräglaufwinkel α_{G} erfolgen, wodurch der Aufbau von Seitenführungskräften durch einen geringen Schräglaufwinkel a ermöglicht wird.

Die Regelung der Lenkbremse 22 in Abhängigkeit des Schräglaufwinkels a hat gegenüber einer Nutzung nur eines eingestellten Lenkwinkels den Vorteil, dass dadurch ein Großteil des Giermomentes der Arbeitsmaschine 10 über die gelenkte erste Achse 12 realisiert werden kann, welche aufgrund der dort angeordneten Achsschenkellenkung effizienter ist als die Lenkbremse 22. Zur Regelung der Lenkbremse 22 wird daher durch die Steuereinrichtung 24 der eingestellte, theoretische Lenkwinkel δₜₕ eines Bodeneingriffsmittels 16 mit dessen tatsächlichem Lenkwinkel δₜₐₜ verglichen, um so aus deren Differenz den Schräglaufwinkel a zu bestimmen. Die in Fig. 3a schematisch in einer Draufsicht dargestellte Arbeitsmaschine 10 weist an der ersten Achse 12, der gelenkten Vorderachse, Bodeneingriffsmittel 16 in Form von Rädern auf. An der zweiten Achse 14, der angetriebenen Hinterachse, sind Bodeneingriffsmittel 16 beispielsweise in Form von Raupenlaufwerken angeordnet. Im Folgenden wird die Bestimmung des Schräglaufwinkels αᵢ für ein kurveninnenseitig angeordnetes Bodeneingriffsmittel 16 beschrieben, die Ermittlung des Schräglaufwinkels αa kann jedoch analog vorgenommen werden.

Der zu bestimmende Schräglaufwinkel αi des kurveninneren Rades 16 wird aus der Differenz des eingestellten Lenkwinkels δ_{i,th} und des tatsächlichen Lenkwinkels δᵢ tat ermittelt. Der eingestellte Lenkwinkel δ_{i,th} des kurveninneren Rades 12 an der gelenkten Vorderachse 12 kann mittels des Lenkwinkelsensors 32 direkt erfasst werden. Der tatsächliche Lenkwinkel δ tat ist über die bekannten geometrischen Bedingungen der Arbeitsmaschine 10, wie der Spur s und dem Radstand I, welche beide in der Recheneinrichtung 24 hinterlegt sein können, sowie aus den Umfangsgeschwindigkeiten vᵢ, vₐ der beiden angetriebenen Bodeneingriffsmittel 16 der zweiten Achse 14, beispielsweise dem innenseitigen Raupenlaufwerk und dem außenseitigen Raupenlaufwerk. Die Differenz der beiden Umfangsgeschwindigkeiten v_{i,a} der angetriebenen Bodeneingriffsmittel 16, welche über den Kurvenradius RHA der Hinterachse 14 und gegebenenfalls der Spur s bestimmbar sind, entspricht dabei der für die Lenkung wirksamen Geschwindigkeit v_{L} an der Vorderachse 12. Basierend auf dieser Geschwindigkeit v_{L} (Fig. 3b) kann zusammen mit der in tatsächlicher Lenkrichtung wirkenden Geschwindigkeit vt der tatsächliche Lenkwinkel δ_{i,tat} bestimmt werden, wobei die Geschwindigkeit vt über eine Winkelgeschwindigkeit ω der Arbeitsmaschine 10 um einen Momentanpol M und den Kurvenradius Ri des inneren Rades bestimmt werden kann.

Die Winkelgeschwindigkeit ω kann beispielsweise auch mittels eines Gyroskops beispielsweise einer inertialen Messeinheit oder einer kreiselstabilisierten Plattform, ermitteln. Mit einem vorhandenen, insbesondere satellitengestützten Navigationssystem, kann beispielsweise der Kurvenradius R_{HA} der Hinterachse über die Auswertung der Positionsdaten ermittelt werden.

Um eine Aktivierung sowie die Steuerung und Regelung der Lenkbremse weiter zu verbessern, können Schwellwerte vorgegeben werden. So kann beispielsweise eine Grenzgeschwindigkeit vorgegeben werden, unterhalb derer eine Aktivierung der Lenkbremse ermöglicht wird, wohingegen bei einer Geschwindigkeit der Arbeitsmaschine oberhalb der Grenzgeschwindigkeit keine Aktivierung möglich ist, beispielsweise bei einer Straßenfahrt der Arbeitsmaschine mit einer Geschwindigkeit oberhalb der Grenzgeschwindigkeit. Ebenso kann beispielsweise für den Lenkwinkel δ und/oder den Schräglaufwinkel a ein Grenzwinkel δ_{G}, α_{G} vorgegeben werden, wobei bei eine Aktivierung der Lenkbremse 22 erst bei Winkel oberhalb des Grenzwinkels δ_{G}, α_{G} erfolgt.

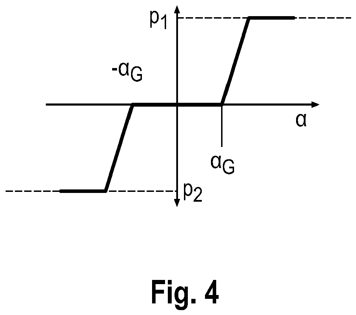

In Fig. 4 zeigt ein Diagramm in dem das Verhältnis des Schräglaufwinkels a zu einem Bremsdruck P1,2, welcher auf die Lenkbremse 22, insbesondere die Bremseinrichtungen 34, wirken. Unterhalb des Grenzwinkels α_{G} für den Schräglaufwinkel a erfolgt weder bei einer Linkskurve (linke Seite des Diagramms) noch bei einer Rechtskurve (rechte Seite des Diagramms) eine Betätigung der Lenkbremse 22. Dadurch werden geringe Schräglaufwinkel a oder Lenkwinkel δ geduldet, so dass kleinere Lenkbewegungen ausschließlich über die Lenkung, insbesondere die Achsschenkellenkung, der Vorderachse 12 erfolgen, welche effizienter lenkt als die Lenkbremse 22. Zudem kann dadurch die Effizienz der Arbeitsmaschine 10 bei Zugarbeiten erhöht werden, da eine Abbremsung der angetriebenen Bodeneingriffsmittel 16 erst oberhalb des Grenzwinkels δ_{G}, α_{G} erfolgt. Bei Überschreiten des Grenzwinkels δ_{G}, α_{G} erfolgt eine Reglung der Lenkbremse 22 entsprechend der definierten Kurve bis zu einem maximalen Bremsdruck zur Unterstützung der Lenkung der Arbeitsmaschine 10.

### Bezugszeichenliste

- 10: landwirtschaftliche Arbeitsmaschine
- 12: erste Achse
- 14: zweite Achse
- 16: Bodeneingriffsmittel
- 18: Antriebsmotor
- 20: Getriebe
- 22: Lenkbremse
- 24: Steuereinrichtung
- 26: Drehzahlsensor
- 28: Antriebsmotorsensor
- 30: Getriebesensor
- 32: Lenkwinkelsensor
- 34: Bremseinrichtung
- 36: Differenzial
- 38: Gyroskop
- 40: Navigationssystem

- δᵢ: Lenkwinkel kurveninneres Bodeneingriffsmittel
- δₐ: Lenkwinkel kurvenäußeres Bodeneingriffsmittel
- δₘ: Mittelwert der Lenkwinkel
- δₜₕ: eingestellter Lenkwinkel
- δₜₐₜ: tatsächlicher Lenkwinkel
- δ_{G}: Grenzlenkwinkel
- a: Schräglaufwinkel
- α_{G}: Grenzschräglaufwinkel
- R_{VA}: Kurvenradius Vorderachse
- RHA: Kurvenradius Hinterachse
- rᵢ: Kurvenradius inneres Bodeneingriffsmittel
- rₐ: Kurvenradius äußeres Bodeneingriffsmittel
- Vᵢ: Umfangsgeschwindigkeit kurveninneres Bodeneingriffsmittel
- Vₐ: Umfangsgeschwindigkeit kurvenäußeres Bodeneingriffsmittel
- Vₘ: Geschwindigkeit Hinterachse
- V_{L}: Geschwindigkeit Vorderachse
- Vᵣ: Geschwindigkeit in radialer Richtung
- vt: Geschwindigkeit in Richtung tatsächlicher Lenkwinkel
- ω: Winkelgeschwindigkeit
- M: Momentanpol
- P_{1,2}: Bremsdruck
- I: Radstand
- S: Spur

## Patentansprüche

1. Landwirtschaftliche Arbeitsmaschine mit mindestens einer ersten Achse (12) und einer zweiten Achse (14), mehreren an den Achsen (12, 14) angeordneten Bodeneingriffsmitteln (16), wobei die Bodeneingriffsmittel (16) zumindest teilweise durch ein Antriebsmotor (18) antreibbar und zumindest teilweise, insbesondere mittels einer Achsschenkellenkung, lenkbar ausgebildet sind, mindestens einem an einem lenkbaren Bodeneingriffsmittel (16) angeordneten Lenkwinkelsensor (32) zur Erfassung eines eingestellten Lenkwinkels (δₜₕ) des zugeordneten Bodeneingriffsmittels (16), und zumindest einer Lenkbremse (22) zur selektiven Abbremsung eines oder mehrerer, insbesondere antreibbarer, Bodeneingriffsmittel (16) einer Achse (12, 14) zur Lenkunterstützung,
wobei eine Steuereinrichtung (24) zum Steuern und Regeln zumindest der Lenkbremse (22) vorgesehen ist,
**dadurch gekennzeichnet, dass** die Steuereinrichtung derart ausgebildet ist, dass ein Lenkwinkel (δ_{th,tat}) und ein Schräglaufwinkel (a) oder ein Schräglaufwinkel (a) mindestens eines lenkbaren Bodeneingriffsmittels (16) bestimmt werden, und die Lenkbremse (22) in Abhängigkeit von dem Lenkwinkel (δ_{th,tat}) und dem Schräglaufwinkel (a) oder dem Schräglaufwinkel (a) gesteuert und geregelt wird.

2. Arbeitsmaschine nach Anspruch 1, **dadurch gekennzeichnet, dass** eine Steuerung und Regelung der Lenkbremse (22) zumindest in Abhängigkeit des eingestellten Lenkwinkels (δₜₕ), einer Ausgangsdrehzahl eines Getriebes (20) der Arbeitsmaschine (10) und einer Umfangsgeschwindigkeit (v_{i,a}) mindestens eines antreibbaren, insbesondere kurveninnenseitigen, Bodeneingriffsmittels (16) erfolgt.

3. Arbeitsmaschine nach Anspruch 1 oder 2, **dadurch gekennzeichnet, dass** der Schräglaufwinkel (a) mindestens eines lenkbaren Bodeneingriffsmittels (16) zumindest in Abhängigkeit des eingestellten Lenkwinkels (δₜₕ), der Arbeitsmaschinengeometrie (l, s), und der Umfangsgeschwindigkeiten (v_{i,a}) kurveninnenseitig und kurvenaußenseitig an einer angetriebenen Achse (12, 14) angeordneter Bodeneingriffsmittel (16) ermittelt wird.

4. Arbeitsmaschine nach einem der vorherigen Ansprüche, **dadurch gekennzeichnet, dass** eine Aktivierung der Lenkbremse (22) in Abhängigkeit eines Verhältnisses zwischen einer theoretischen Umfangsgeschwindigkeit (v_{i,a th}) und einer tatsächlichen Umfangsgeschwindigkeit (v_{i,a tat}) mindestens eines angetriebenen Bodeneingriffsmittels (16) erfolgt.

5. Arbeitsmaschine nach einem der vorherigen Ansprüche, **dadurch gekennzeichnet, dass** eine Aktivierung der Lenkbremse (22) in Abhängigkeit einer Grenzgeschwindigkeit (v_{G}) erfolgt, wobei bei deren Unterschreitung die Lenkbremse (22) aktivierbar ist.

6. Arbeitsmaschine nach einem der vorherigen Ansprüche, **dadurch gekennzeichnet, dass** eine Aktivierung der Lenkbremse (22) in Abhängigkeit eines Grenzlenkwinkels (δ_{G}) und/oder eines Grenzschräglaufwinkels (α_{G}) erfolgt, wobei bei dessen Überschreitung die Lenkbremse aktivierbar ist.

7. Arbeitsmaschine nach einem der vorherigen Ansprüche, **dadurch gekennzeichnet, dass** die Arbeitsmaschine (10) zur Erfassung einer Winkelgeschwindigkeit (ω) der Arbeitsmaschine (10), insbesondere zur Bestimmung des tatsächlichen Lenkwinkels (δ_{i,a tat}), ein Gyroskop (38) aufweist.

8. Arbeitsmaschine nach einem der vorherigen Ansprüche, **dadurch gekennzeichnet, dass** ein, insbesondere satellitengestütztes, Navigationssystem (40) vorgesehen ist, durch dessen Positionsdaten ein Kurvenradius (R_{HA,VA}) mindestens einer der Achsen (12, 14), insbesondere zur Bestimmung des tatsächlichen Lenkwinkels (δ_{i,a tat}), erfassbar ist.

9. Arbeitsmaschine nach einem der vorherigen Ansprüche, **dadurch gekennzeichnet, dass** ein Bodeneingriffsmittel (16) in Form eines Rads oder eines Raupenlaufwerkes ausgebildet ist.

10. Lenkunterstützungsverfahren für eine landwirtschaftliche Arbeitsmaschine mit mindestens einer ersten Achse (12) und einer zweiten Achse (14), mehreren an den Achsen (12, 14) angeordneten Bodeneingriffsmitteln (16), wobei die Bodeneingriffsmittel (16) zumindest teilweise durch einen Antriebsmotor (18) antreibbar und zumindest teilweise, insbesondere mittels einer Achsschenkellenkung, lenkbar ausgebildet sind, mindestens einem an einem lenkbaren Bodeneingriffsmittel (16) angeordneten Lenkwinkelsensor (32) zur Erfassung eines eingestellten Lenkwinkels (δₜₕ) des zugeordneten Bodeneingriffsmittels (16), und zumindest einer Lenkbremse (22) zur selektiven Abbremsung eines oder mehrerer, insbesondere antreibbarer, Bodeneingriffsmittel (16) einer Achse (12, 14) zur Lenkunterstützung, wobei eine Steuereinrichtung (24) zum Steuern und Regeln zumindest der Lenkbremse (22) vorgesehen ist, **dadurch gekennzeichnet, dass** ein Lenkwinkel (δ_{th,tat}) und ein Schräglaufwinkel (a) oder ein Schräglaufwinkel (a) mindestens eines lenkbaren Bodeneingriffsmittels (16) bestimmt werden, und die Lenkbremse (22) in Abhängigkeit von dem Lenkwinkel (δ_{th,tat}) und dem Schräglaufwinkel (a) oder dem Schräglaufwinkel (a) gesteuert und geregelt wird.

11. Verfahren nach Anspruch 10, **dadurch gekennzeichnet, dass** eine Aktivierung der Lenkbremse (22) in Abhängigkeit eines Verhältnisses zwischen einer theoretischen Umfangsgeschwindigkeit (v_{i.a th}) und einer tatsächlichen Umfangsgeschwindigkeit (v_{i,a tat}) mindestens eines angetriebenen Bodeneingriffsmittels (16), einer Grenzgeschwindigkeit (V_{G}) und/oder eines Grenzlenkwinkels (δ_{G}) und/oder eines Grenzschräglaufwinkels (α_{G}) erfolgt.

12. Verfahren nach Anspruch 10 oder 11, **dadurch gekennzeichnet, dass** eine Winkelgeschwindigkeit der Arbeitsmaschine (10), insbesondere zur Bestimmung des Schräglaufwinkels (a) mindestens eines Bodeneingriffsmittels (16), mittels eines Gyroskops (38) bestimmt wird.

13. Verfahren nach einem der Ansprüche 10 bis 12, **dadurch gekennzeichnet, dass** ein Kurvenradius (R_{HA,VA}) mindestens einer Achse (12, 14) mittels eines, insbesondere satellitengestützten, Navigationssystems (40) bestimmt wird.

## Claims

1. Agricultural work machine with at least one first axle (12) and one second axle (14), several ground-engaging means (16) arranged on the axles (12,14), wherein the ground-engaging means (16) are formed at least partly driveable by a drive motor (18) and at least partly steerable, in particular by means of a stub axle steering system, at least one steering angle sensor (32) arranged on a steerable ground-engaging means (16) for detecting a set steering angle (δₜₕ) of the allocated ground-engaging means (16), and at least one steering brake (22) for the selective braking of one or more, in particular driveable, ground-engaging means (16) of an axle (12, 14) for assisted steering,
wherein
a control device (24) is provided for controlling and regulating at least the steering brake (22),
**characterized in that** the control device is formed such that both a steering angle (5_{th,tat}) and a slip angle (a) or just a slip angle (a) of at least one steerable ground-engaging means (16) are determined, and the steering brake (22) is controlled and regulated as a function of both the steering angle (5_{th,tat}) and the slip angle (a) or just the slip angle (a).

2. Work machine according to claim 1, **characterized in that** a control and regulation of the steering brake (22) is carried out at least as a function of the set steering angle (δₜₕ), an output speed of a gearbox (20) of the work machine (10) and a circumferential speed (V_{i,a}) of at least one driveable ground-engaging means (16), in particular on the inside of the turn.

3. Work machine according to claim 1 or 2, **characterized in that** the slip angle (α) of at least one steerable ground-engaging means (16) is ascertained at least as a function of the set steering angle (δₜₕ), the work machine geometry (l,s), and the circumferential speeds (v_{i,a}) of ground-engaging means (16) arranged on a driven axle (12, 14) on the inside of the turn and on the outside of the turn.

4. Work machine according to one of the preceding claims, **characterized in that** the steering brake (22) is activated as a function of a ratio between a theoretical circumferential speed (v_{i,a th}) and an actual circumferential speed (v_{i,a tat}) of at least one driven ground-engaging means (16).

5. Work machine according to one of the preceding claims, **characterized in that** the steering brake (22) is activated as a function of a limit speed (v_{G}), below which the steering brake (22) can be activated.

6. Work machine according to one of the preceding claims, **characterized in that** the steering brake (22) is activated as a function of a limit steering angle (δ_{G}) and/or a limit slip angle (α_{G}), above which the steering brake can be activated.

7. Work machine according to one of the preceding claims, **characterized in that** the work machine (10) has a gyroscope (38) for detecting an angular velocity (ω) of the work machine (10), in particular for determining the actual steering angle (δ_{i,a tat}).

8. Work machine according to one of the preceding claims, **characterized in that** a navigation system (40), in particular satellite-supported, is provided, the position data of which can be used to detect a curve radius (R_{HA,VA}) of at least one of the axles (12, 14), in particular for determining the actual steering angle (δ_{i,a tat}).

9. Work machine according to one of the preceding claims, **characterized in that** a ground-engaging means (16) is designed in the form of a wheel or crawler track.

10. Assisted steering method for an agricultural work machine with at least one first axle (12) and one second axle (14), several ground-engaging means (16) arranged on the axles (12, 14), wherein the ground-engaging means (16) are formed at least partly driveable by a drive motor (18) and at least partly steerable, in particular by means of a stub axle steering system, at least one steering angle sensor (32) arranged on a steerable ground-engaging means (16) for detecting a set steering angle (δₜₕ) of the allocated ground-engaging means (16), and at least one steering brake (22) for the selective braking of one or more, in particular driveable, ground-engaging means (16) of an axle (12, 14) for assisted steering, wherein a control device (24) is provided for controlling and regulating at least the steering brake (22), **characterized in that** both a steering angle (5_{th,tat}) and a slip angle (a) or just a slip angle (a) of at least one steerable ground-engaging means (16) are determined, and the steering brake (22) is controlled and regulated as a function of both the steering angle (5_{th,tat}) and the slip angle (a) or just the slip angle (a).

11. Method according to claim 10, **characterized in that** the steering brake (22) is activated as a function of a ratio between a theoretical circumferential speed (v_{i,a th}) and an actual circumferential speed (v_{i,a tat}) of at least one driven ground-engaging means (16), a limit speed (v_{G}) and/or a limit steering angle (δ_{G}) and/or a limit slip angle (αG).

12. Method according to claim 10 or 11, **characterized in that** an angular velocity of the work machine (10), in particular for determining the slip angle (a) of at least one ground-engaging means (16), is determined by means of a gyroscope (38).

13. Method according to one of claims 10 to 12, **characterized in that** a curve radius (R_{HA,VA}) of at least one axle (12, 14) is determined by means of a navigation system (40), in particular satellite-supported.

## Revendications

1. Machine de travail agricole comprenant au moins un premier essieu (12) et un second essieu (14), plusieurs moyens de prise au sol (16) disposés sur les essieux (12, 14), les moyens de prise au sol (16) étant conçus de façon à pouvoir être entraînés au moins en partie par l'intermédiaire d'un moteur d'entraînement (18) et être au moins en partie dirigés, en particulier au moyen d'une direction de fusée d'essieu, comprenant au moins un capteur d'angle de braquage (32) disposé sur un moyen de prise au sol dirigeable (16) pour détecter un angle de braquage adopté (δₜₕ) du moyen de prise au sol associé (16), et comprenant au moins un frein de direction (22) pour le freinage sélectif d'un ou plusieurs moyens de prise au sol en particulier entraînables (16) d'un essieu (12, 14) dans un but d'assistance de direction, un équipement de commande (24) étant prévu pour commander et réguler au moins le frein de direction, **caractérisée en ce que** l'équipement de commande est conçu de façon qu'un angle de braquage (δ_{th,tat}) et un angle de dérive (α) ou un angle de dérive (α) d'au moins un moyen de prise au sol dirigeable (16) soient déterminés, et le frein de direction (22) est commandé et régulé en fonction de l'angle de braquage (δ_{th,tat}) et de l'angle de dérive (α) ou de l'angle de dérive (α).

2. Machine de travail selon la revendication 1, **caractérisée en ce qu'**une commande et une régulation du frein de direction (22) s'effectuent au moins en fonction de l'angle de braquage adopté (δₜₕ), d'une vitesse de rotation de sortie d'une transmission (20) de la machine de travail (10) et d'une vitesse circonférentielle (v_{i,a}) d'au moins un moyen de prise au sol entraînable, en particulier côté intérieur de virage (16).

3. Machine de travail selon la revendication 1 ou 2, **caractérisée en ce que** l'angle de dérive (α) d'au moins un moyen de prise au sol dirigeable (16) est déterminé au moins en fonction de l'angle de braquage adopté (δₜₕ), de la géométrie de machine de travail (I,s) et des vitesses circonférentielles (v_{i,a}), côté intérieur de virage et côté extérieur de virage, de moyens de prise au sol (16) disposés sur un essieu moteur (12, 14) .

4. Machine de travail selon une des revendications précédentes, **caractérisée en ce qu'**une activation du frein de direction (22) s'effectue en fonction d'un rapport entre une vitesse circonférentielle théorique (v_{i,a th}) et une vitesse circonférentielle réelle (v_{i,a ta}) d'au moins un moyen de prise au sol entraîné (16) .

5. Machine de travail selon une des revendications précédentes, **caractérisée en ce qu'**une activation du frein de direction (22) s'effectue en fonction d'une vitesse limite (v_{G}), le frein de direction (22) étant activable en cas de soupassement de celle-ci.

6. Machine de travail selon une des revendications précédentes, **caractérisée en ce qu'**une activation du frein de direction (22) s'effectue en fonction d'un angle de braquage limite (δ_{G}) et/ou d'un angle de dérive limite (α_{G}), le frein de direction étant activable en cas de surpassement de ceux-ci.

7. Machine de travail selon une des revendications précédentes, **caractérisée en ce que** la machine de travail (10) comporte un gyroscope (38) pour détecter une vitesse angulaire (ω) de la machine de travail (10), en particulier pour déterminer l'angle de braquage réel (δ_{i,a} tat) .

8. Machine de travail selon une des revendications précédentes, **caractérisée en ce qu'**est prévu un système de navigation, en particulier à assistance satellitaire (40), à l'aide des données de position duquel peut être détecté un rayon de virage (R_{HA,VA}) d'au moins un des essieux (12, 14), en particulier pour déterminer l'angle de braquage réel (δ_{i,a tat}) .

9. Machine de travail selon une des revendications précédentes, **caractérisée en ce qu'**un moyen de prise au sol (16) est conformé en roue ou en train de roulement à chenilles.

10. Procédé d'assistance de direction pour une machine de travail agricole comprenant au moins un premier essieu (12) et un second essieu (14), plusieurs moyens de prise au sol (16) disposés sur les essieux (12, 14), les moyens de prise au sol (16) étant conçus de façon à pouvoir être entraînés au moins en partie par l'intermédiaire d'un moteur d'entraînement (18) et être au moins en partie dirigés, en particulier au moyen d'une direction de fusée d'essieu, comprenant au moins un capteur d'angle de braquage (32) disposé sur un moyen de prise au sol dirigeable (16) pour détecter un angle de braquage adopté (δₜₕ) du moyen de prise au sol associé (16), et comprenant au moins un frein de direction (22) pour le freinage sélectif d'un ou plusieurs moyens de prise au sol en particulier entraînables (16) d'un essieu (12, 14) dans un but d'assistance de direction, un équipement de commande (24) étant prévu pour commander et réguler au moins le frein de direction (22), **caractérisée en ce qu'**un angle de braquage (δ_{th,tat}) et un angle de dérive (α) ou un angle de dérive (α) d'au moins un moyen de prise au sol dirigeable (16) sont déterminés, et le frein de direction (22) est commandé et régulé en fonction de l'angle de braquage (δ_{th,tat}) et de l'angle de dérive (α) ou de l'angle de dérive (α).

11. Procédé selon la revendication 10, **caractérisé en ce qu'**une activation du frein de direction (22) s'effectue en fonction d'un rapport entre une vitesse circonférentielle théorique (v_{i,a th}) et une vitesse circonférentielle réelle (v_{i,a ta}) d'au moins un moyen de prise au sol entraîné (16), d'une vitesse limite (v_{G}) et/ou d'un angle de braquage limite (δ_{G}) et/ou d'un angle de dérive limite (α_{G}).

12. Procédé selon la revendication 10 ou 11, **caractérisé en ce qu'**une vitesse angulaire de la machine de travail (10), en particulier pour déterminer l'angle de dérive (α) d'au moins un moyen de prise au sol (16), est déterminée au moyen d'un gyroscope (38).

13. Procédé selon une des revendications 10 à 12, **caractérisé en ce qu'**un rayon de virage (R_{HA,VA}) d'au moins un essieu (12, 14) est déterminé au moyen d'un système de navigation, en particulier à assistance satellitaire (40).
